(19) **Europäisches Patentamt / European Patent Office / Office européen des brevets**

(11) **EP 2 652 907 B1**

(12) **EUROPEAN PATENT SPECIFICATION**

(45) Date of publication and mention
of the grant of the patent:
**19.11.2014 Bulletin 2014/47**

(21) Application number: **10798055.9**

(22) Date of filing: **16.12.2010**

(51) Int Cl.:
*H04L 12/54* (2013.01)     *H04W 16/04* (2009.01)
*H04W 24/08* (2009.01)     *H04L 12/24* (2006.01)
*H04W 8/24* (2009.01)

(86) International application number:
**PCT/EP2010/069870**

(87) International publication number:
**WO 2012/079633 (21.06.2012 Gazette 2012/25)**

(54) **KEY PERFORMANCE INDICATOR FOR OPERATOR PERFORMANCE EVALUATION IN COMMUNICATION NETWORK RESOURCE SHARING**

LEISTUNGSKENNZAHL ZUR BEURTEILUNG DER LEISTUNGSFÄHIGKEIT IN EINEM KOMMUNIKATIONSNETZ MIT GEMEINSAMER RESSOURCENNUTZUNG

INDICATEUR DE PERFORMANCES-CLÉS POUR ÉVALUATION DE PERFORMANCES D'OPÉRATEUR EN PARTAGE DE RESSOURCES DE RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.10.2013 Bulletin 2013/43**

(73) Proprietor: **Nokia Solutions and Networks Oy 02610 Espoo (FI)**

(72) Inventors:
 • **MICHAELSEN, Per Henrik
  DK-9000 Aalborg (DK)**
 • **WIGARD, Jeroen
  DK-9270 Klarup (DK)**

(74) Representative: **Borgström, Markus et al
Nokia Solutions and Networks GmbH & Co. KG
CEF T&I IPR / Patent Administration
80240 Munich (DE)**

(56) References cited:
**EP-A1- 2 151 954     WO-A1-2004/004398
US-A1- 2007 264 986**

• **ALQAHTANI S ET AL: "Adaptive radio resource with borrowing for multi-operators 3G+ wireless networks with heterogeneous traffic", COMPUTER COMMUNICATIONS, ELSEVIER SCIENCE PUBLISHERS BV, AMSTERDAM, NL, vol. 29, no. 15, 5 September 2006 (2006-09-05), pages 2945-2951, XP025090019, ISSN: 0140-3664, DOI: DOI:10.1016/J.COMCOM.2006.04.009 [retrieved on 2006-09-05]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to operator performance evaluation when at least a part of a communication network is shared between operators, and in particular to defining a key performance indicator for the operator performance evaluation.

An example of communication network sharing is related to radio access technologies in general, in which concept radio access networks are shared between network operators (also known as RAN sharing). However, communication network sharing is not limited to RAN sharing, and any type of sharing may be adopted, for instance core network sharing, site sharing, etc.

In today's typical radio systems, network operators are not always allowed to apply communication network sharing. This is mainly due to political reasons, where one of the main priorities was to create a set of parallel networks for each radio system to stimulate competition on tariffs for use of mobile telephony. For these networks (at least in most countries) it was not allowed to apply roaming between operators in the host country - this also avoids operators to save money during the network roll-out phase.

Currently, there are two general trends in terms of communication network sharing. The first trend is that operators are considering ramping down use of legacy systems like GSM (global system for mobile communications), and do spectrum harvesting (or spectrum refarming) for new and more bandwidth efficient systems. To allow for support of legacy mobile phones, the starting point here is to introduce spectrum sharing between operators, i.e. basically creating a shared nation wide system, where all operators can carry legacy traffic. The second trend is that new radio access technologies like 3GPP (third generation partnership project) long term evolution (LTE) will start being deployed after national licensing auctions. Due to the heavy cost of rolling out a nation wide network for this system for each operator, considerations have been made on removing or relaxing the requirement for each operator having a full-blown nation wide network.

There are different degrees of communication network sharing, from sharing a site location, but still having different hardware, to fully sharing all equipment and radio spectrum.

Here it is focussed on the cases where the bottleneck of the system is shared by the operators, at least in some part of time, for instance hardware capacity, radio capacity, software capacity, or user- and control-plane resources.

There may be different agreements or frameworks on how communication network sharing can be done. Some examples are:

- Multiple operators share spectrum and hardware with a certain agreed split in throughput and/or resources. Instantaneously the throughput split can be different, for instance when one operator has no traffic the other operator may use all resources/throughput.
- A virtual operator is using spectrum and hardware of a "normal" operator. In this case a minimum guaranteed throughput and a maximum throughput may be agreed. Basically the normal operator provides a "bitpipe" with a maximum and minimum capacity to the virtual operator.
- An agreement between operators which includes a minimum guaranteed throughput, a maximum throughput and a split in resources if traffic is between the minimum and maximum throughputs. A prior art document disclosing multiple operators sharing an agreed minimum number of resources is patent application US 2007/264986 A1.

The present invention aims at providing a mechanisms for appropriately evaluating whether each operator got what he should get according to the agreement, i.e. answering the question whether the agreement is fulfilled or has been violated.

In particular, the invention aims at defining an appropriate key performance indicator (KPI) for operator performance which monitors utilization and performance of each operator. This KPI may be used for documenting delivered service e.g. for billing purposes, and e.g. as input to an RRM (radio resource management) entity of a cellular communication network system or other traffic management algorithms.

This is achieved by the method and apparatus as defined in the appended claims. The invention may also be implemented by a computer program product.

In the following the invention will be described by way of embodiments thereof taking into account the accompanying drawings, in which:

Fig. 1 shows a flow chart illustrating an evaluation method according to an embodiment of the invention.

Fig. 2 shows a diagram illustrating resource usage between operators over time according to an implementation example of the present invention.

Fig. 3 shows a diagram illustrating delays over time according to the implementation example.

Fig. 4 shows a schematic block diagram illustrating a structure of a control unit which may be used for implementing an evaluation method according to an embodiment of the invention.

Defining a metric which can be used to evaluate whether an agreement or framework between operators using communication network sharing has been kept or violated is not straightforward. This problem gets increasingly difficult when it is allowed that one operator can use the share of the other operator when that operator is not using it. It is to be noted that the communication network may comprise a cellular communication network system and the framework may be used on a cell basis but also for larger areas of multiple cells.

For example, two operators have agreed on a 50%-50% share of a system which may comprise at least a part of a communication network, and during the night one of the operators has no traffic. This may result in the other operator using all resources of the system during the night, provided there is enough traffic for that operator. Now just looking at the throughput or resource usage it seems that the agreement has not been met.

In the above example it is likely unacceptable to block during daytime the following day the operator that happened to utilize most resources during the night-time. So there is a temporal issue involved in the measurement of performance.

The KPI should provide long term cumulated measurements of for instance throughput or resource utilization, as well as short term measurements possibly averaged or filtered over short time intervals. A basic metric being cumulated and averaged is likely but not necessarily the same in both cases.

Long term measurements may be useful for bookkeeping, billing, and documentation. Short term measurements may be useful for comparing present performance among operators e.g. to be used as input to a scheduler controlling operator sharing. The present invention proposes a metric for evaluating operator performance, which can be used by an operator participating in communication network sharing to evaluate whether a communication network sharing agreement/framework or service level agreement was kept or violated.

According to an embodiment of the invention:

- For every time period j it is evaluated whether the communication network sharing framework has been violated or not. This is stored in a metric m(j).
- A final metric is the sum of metrics m(j) over a time of evaluation: M=sum(m(j)).

The communication network sharing framework during time period j is violated for operator k when:

- Operator k is getting less than an agreed minimum number of resources or less than an agreed minimum throughput or is getting less than an agreed share of resources or less than an agreed share of throughput, <u>AND</u>
- Operator k is having enough traffic to be served to fill the agreed minimum number of resources or the agreed minimum throughput, or the agreed share of resources or the agreed share of throughput.

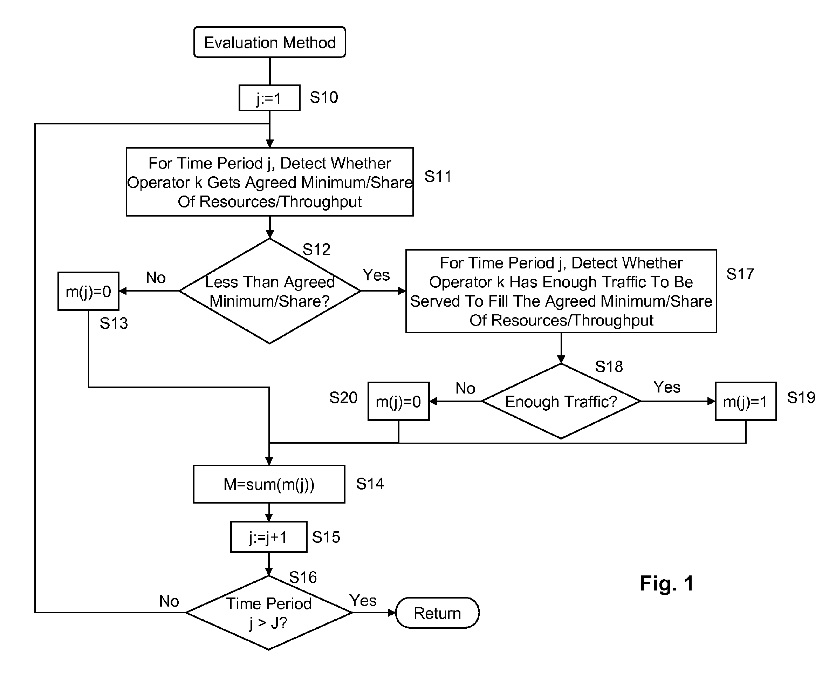

Fig. 1 shows a flowchart illustrating a method for evaluating operator performance according to an embodiment of the invention, which can be used by an operator participating in communication network sharing to evaluate whether a communication network sharing framework was kept or violated.

In step S10, when the evaluation method is started, an index j of a time period is set to 1.

In step S11, for time period j, it is detected whether an operator k of at least a part of a communication network gets less than an agreed minimum number of resources of the part of the communication network or less than an agreed minimum throughput in the part of the communication network, or gets less than an agreed share of resources of the part of the communication network or less than an agreed share of throughput in the part of the communication network. The agreed minimum number of resources or the agreed minimum throughput, or the agreed share of resources or the agreed share of throughput is defined in the sharing framework. There may be at least two operators sharing the part of the communication network. Hence, k may be an integer equal to or greater than 2.

In step S12, in case it is detected that the operator k does not get less than the agreed minimum number of resources or less than the agreed minimum throughput, or less than the agreed share of resources or less than the agreed share of throughput, the process advances to step S13 where it is determined that the sharing framework is not violated and this result is stored in a metric m(j) as m(j)=0. Then the process advances to step S14 where the metric m(j) may be summed to a final metric M=sum(m(j)).

In step S15 the index j is incremented by 1, and in step S16 it is checked whether the time period j exceeds a time of evaluation J. If not, the process returns to step S11. If the time period j exceeds the time of evaluation J in step S16, the process ends.

In step S12, in case it is detected that the operator k gets less than the agreed minimum number of resources or less than the agreed minimum throughput, or less than the agreed share of resources or less than the agreed share of throughput, the process advances to step S17 in which it is detected whether the operator k has enough traffic to be served to fill the agreed minimum number of resources or the agreed minimum throughput, or the agreed share of resources or the agreed share of throughput.

In step S18, in case it is detected that the operator k has enough traffic to be served, the process advances to step S19 where it is determined that the sharing framework is violated and this result is stored in the metric m(j) as m(j)=1. Then the process advances to step S14 where the metric m(j) may be summed to the final metric M=sum(m(j)).

In step S15 the index j is incremented by 1, and in step S16 it is checked whether the time period j exceeds the time of evaluation J. If not, the process returns to step S11. If the time period j exceeds the time of evaluation J in step S16, the process ends.

In step S18, in case it is detected that the operator k has not enough traffic to fill its share of the resources, the process advances to step S20 where it is determined that the sharing framework is not violated and this result is stored in the metric m(j) as m(j)=0. Then the process advances to step S14 where the metric m(j) may be summed to the final metric M=sum(m(j)).

In step S15 the index j is incremented by 1, and in step S16 it is checked whether the time period j exceeds the time of evaluation J. If not, the process returns to step S11. If the time period j exceeds the time of evaluation J in step S16, the process ends.

Measurements on which the above evaluation method is based should be averaged to avoid acting on spurious fluctuations. The term "averaging period" is used generically to describe how far back in time samples have a significant influence, e.g. a filter length when applying a finite (FIR) filter, or a number of time constants when applying an infinite (IIR) filter.

For example, packet scheduling in a communication network is based on measurements with an averaging period in the order of fractions of a second to achieve fulfilment of QoS (quality of service) requirements for every user of the communication network, and proper sharing among users includes sharing among operators on relatively short term basis. The averaging period for the metric m(j) (sharing performance metric), i.e. the measurements on which the metric m(j) is based (underlying resource/throughput measurements), should be greater than that of packet scheduler metrics in order to allow for short term deviations from requirements that are controlled by a packet scheduler performing the packet scheduling.

For identifying longer term deviance from targets, and in particular when used for control purposes, such as adaptation of parameters of the evaluation method, measurements for the sharing performance metric should be further averaged to achieve an averaging period in the order of for example 10 times the averaging period of the packet scheduler metrics, which is in the order of 100 ms (or more).

For example, two operators, which are called operator 1 and operator 2, have agreed on sharing spectrum and equipment (resources) of a communication network on a 50%-50% basis, meaning each has right to 50% of the resources when they have enough traffic to be served to fill the resources.

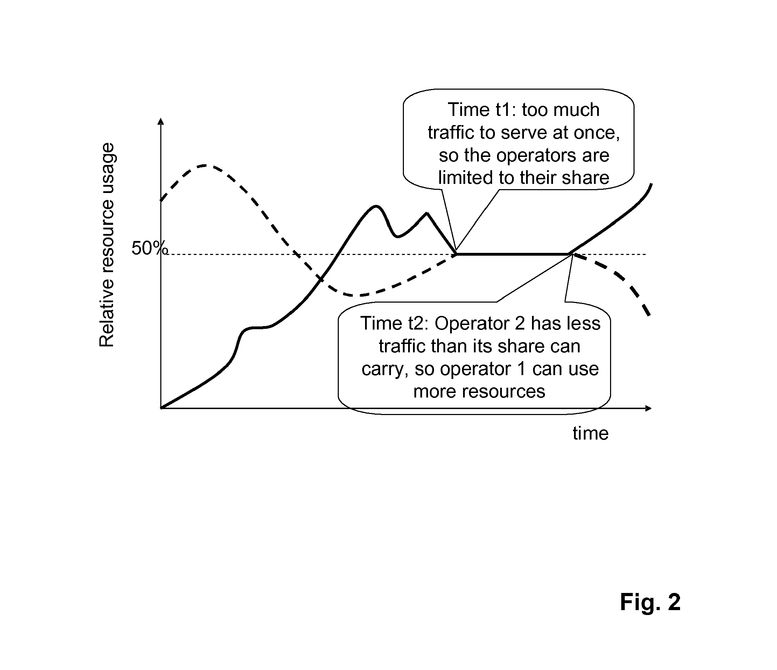

An actual resource usage over time is shown in Fig. 2. The graph depicted as solid line illustrates the actual resource usage of operator 1, and the graph depicted as dashed line illustrates the actual resource usage of operator 2.

At a time t1 there is too much traffic to serve at once in the part of the communication network shared by the operators 1 and 2. Thus, the operators are limited to their share.

At a time t2, operator 2 has less traffic than its share can carry. Thus, operator 1 can use more resources.

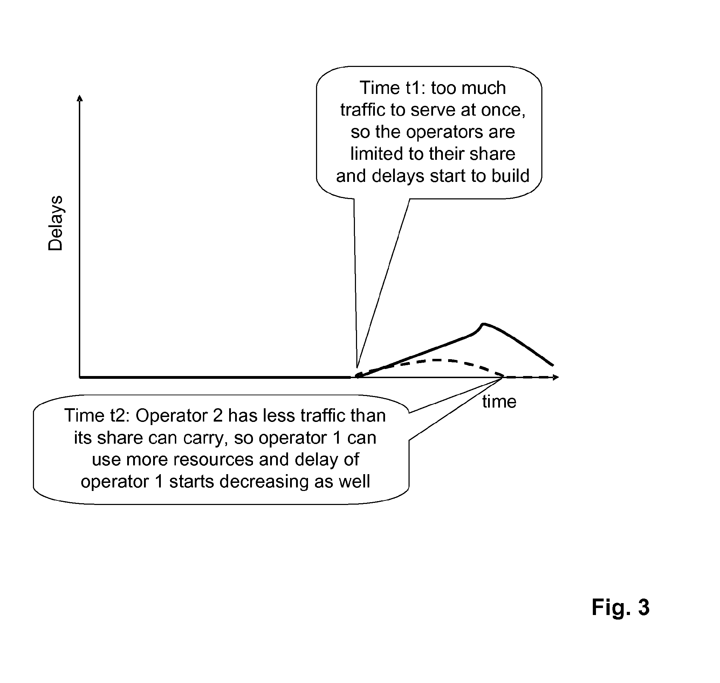

Fig. 3 shows an average delay trend (delays) over time according to the above example. The graph depicted as solid line illustrates the delay for operator 1, and the graph depicted as dashed line illustrates the delay for operator 2.

At the time t1, as the operators are limited to their share, delays start to build. At the time t2, as operator 2 has less traffic and operator 1 can use more resources, also the delay for operator 1 starts decreasing.

As long as the delay shown in Fig. 3 is below a certain minimum, no operator can complain, since traffic is carried fast enough. When the delays start exceeding the minimum threshold at time t1, it is interesting to monitor whether the sharing framework is violated. This can be done by monitoring from t1 on the metric m(j), where:

m (j) =0    when an operator gets its share of resources, i.e. 50%, AND the operator has traffic to fill the resources; and
m (j) =1    otherwise.

This results in values of 0 for all time periods j in the above example, since the communication network sharing agreement/framework is kept.

To summarize whether the sharing framework is kept all the time, the values of m(j) can be summed over the evaluation time J (a day, month, year, etc.) or continuously monitored.

Dependent on the agreement, the condition for m(j) = 0 may vary. For example, the proportion (50% as mentioned above) may vary, and the way in which it is determined what share an operator has achieved may vary.

In the following, example measurements are described that may be used to quantify achieved shares between operators.

It is assumed that c(oper,t) is a measurement of an achieved cumulated performance for users that are subscribers of operator "oper" in a transmission time interval (TTI) at time t. The achieved cumulated performance may be represented in terms of allocated resources or in terms of an amount of transferred data (bits), dependent on the way a service level agreement is specified.

An averaged measure of achieved performance may be obtained by a first order recursive filter:

$$C(oper,t) = (1 - 1/N) \; C(oper,t-1) + (1/N) \; c(oper,t).$$

Obtained "instantaneous" shares may be defined as:

$$Share(oper1) = C(oper1, \; t) \; / \; (sum \; over \; all \; operators \; of \; C(oper,t)).$$

The parameter N determines the averaging period, as discussed above. The above formula assumes without loss of generality that the time, t, is an integer counter of TTIs.

In other words, referring to Fig. 1, for determining whether the operator k gets less than the agreed minimum number of resources or less than the agreed minimum throughput, or less than the agreed share of resources or less than the agreed share of throughput, an averaged measure of a use of resources or throughput may be calculated for the operator k for the time period j by measuring the use at several consecutive times including a time t corresponding to the time period j, thereby obtaining several consecutive measurements, and a weighted average of the several consecutive measurements may be formed, thereby obtaining the averaged measure, wherein the number of the several consecutive measurements included in the averaged measure corresponds to an averaging period.

Moreover, for determining whether the operator k gets less than the agreed share of resources or less than the agreed share of throughput, the averaged measure for each operator k of the part of the communication network may be obtained, thereby obtaining averaged measures, and the averaged measures may be summed, and a share of the operator k may be calculated by dividing the averaged measure of the operator k by the summed averaged measures.

With this measure of shares the above rule for the metric m(j) = 1 reads as follows:

m (j) =1 when

- Operator gets less than 50-margin % of resources AND
- Operator has enough traffic in buffers to be served to fill at least 50% of the resources.

Otherwise m (j) =0 .

The variable "margin" can be used to take some variance into account.

There are several likely scenarios of sharing among operators. In the following example scenarios and roles are described in relation to the above performance measurement, without limiting the performance measurement to these cases.

According to a first example, an operator owns the communication network and acts as a service provider towards one or more virtual operators that are purchasing access to resources and services provided by the service provider. A service level agreement may specify availability of a certain amount of recourses (e.g. throughput) to the virtual operator, thus providing a "bitpipe" of certain volume.

The service level agreement is fulfilled towards the virtual operator when the certain amount of resources is available at times when the virtual operator has data amount ready for transmission that is sufficient to "fill the bitpipe". In case there is not sufficient data available for transmission, the service level agreement is fulfilled by default.

According to a second example 2, two or more operators are sharing a communication network on a fair sharing basis, such that there is an agreed division of resources in possibly uneven proportions among the operators. The resources must be provided to the operators in accordance with the specified proportions, or, in terms of throughput, whatever capacity can be achieved must be divided to the operators in accordance with the specified proportions. The service level agreement is fulfilled when resource utilizations or achieved operator capacities divide according to the specified proportions.

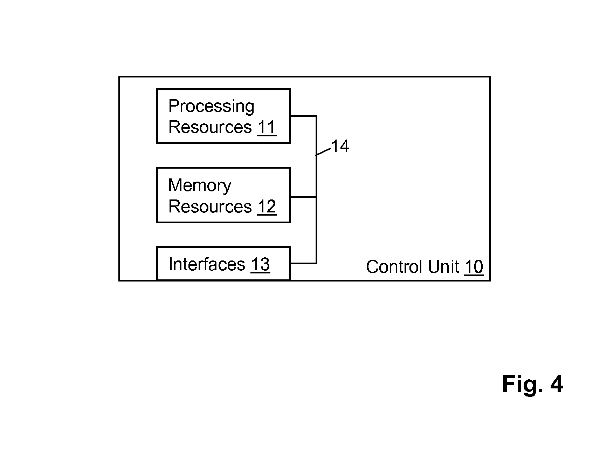

Fig. 4 shows a schematic block diagram illustrating a structure of a control 10 unit which may be used for implementing an evaluation method according to an embodiment of the invention.

The control unit 10 includes processing resources 11, memory resources 12 that may store a program, and interfaces 13 which may include (hardwire) links and/or a suitable radio frequency transceiver coupled to one or more antennas for bidirectional wireless communications over one or more wireless links. The processing resources 11, memory resources 12 and interfaces 13 may be coupled by a bus 14.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

Programs stored by the memory resources 12 are assumed to include program instructions that, when executed by the processing resources 11, enable the control unit 10 to operate in accordance with the exemplary embodiments and aspects of this invention. Inherent in the processing resources 11 is a clock to enable synchronism among the various apparatus for transmissions and receptions within the appropriate time intervals and slots required, as the scheduling grants and the granted resources/subframes are time dependent. The transceivers of the interfaces 13 include both transmitter and receiver, and inherent in each is a modulator/demodulator commonly known as a modem. The interfaces 13 may also include a modem to facilitate communication over (hardwire) links.

In general, the exemplary embodiments of this invention may be implemented by computer software stored in the memory resources 12 and executable by the processing resources 11 of the control unit 10, or by hardware, or by a combination of software and/or firmware and hardware in the control unit 10.

The memory resources 12 may be of any type suitable to the local technical environment and may be implemented using any suitable data storage technology, such as semiconductor-based memory devices, magnetic memory devices and systems, optical memory devices and systems, fixed memory and removable memory. The processing resources 11 may be of any type suitable to the local technical environment, and may include one or more of general purpose computers, special purpose computers, microprocessors, digital signal processors (DSPs) and processors based on a multi-core processor architecture, as non-limiting examples.

The control unit 10 may function as part of network elements of operator k. For example, the control unit 10 with its processing resources 11, memory resources 12 and interfaces 13 may be used to implement the evaluation method shown in Fig. 1. In other words, the processing resources 11 may execute the evaluation method, using the memory resources 12 e.g. for reading out processing instructions corresponding to the method steps, caching and storing processing results, and the interfaces 13 e.g. for receiving/transmitting performance measurements and/or processing results from/to the outside of the control unit 10, e.g. control units of other operators of the part of the communication network. Alternatively or in addition, the method steps may be implemented by hardware in the processing resources 11, as mentioned above.

According to an aspect of the invention, an apparatus comprises first detecting means for, for every time period j of a time of evaluation J, wherein j is an integer equal to or greater than 1, detecting whether an operator k of at least a part of a communication network gets less than an agreed minimum number of resources of the part of the communication network or less than an agreed minimum throughput in the part of the communication network, or gets less than an agreed share of resources of the part of the communication network or less than an agreed share of throughput in the part of the communication network, wherein the agreed minimum number of resources or the agreed minimum throughput, or the agreed share of resources or the agreed share of throughput is defined in a sharing framework, wherein k is an integer equal to or greater than 2. In case it is detected that the operator k does not get less than the agreed minimum number of resources or less than the agreed minimum throughput, or less than the agreed share of resources or less than the agreed share of throughput, first determining means of the apparatus determine that the sharing framework is not violated and store this result in a metric m(j). In case it is detected that the operator k gets less than the agreed minimum number of resources or less than the agreed minimum throughput, or less than the agreed share of resources or less than the agreed share of throughput, second detecting means of the apparatus detect whether the operator k has enough traffic to be served to fill the agreed minimum number of resources or the agreed minimum throughput, or the agreed share of resources or the agreed share of throughput. In case it is detected that the operator k has enough traffic to be served, second determining means of the apparatus determine that the sharing framework is violated and store this result in the metric m(j). In case it is detected that the operator k has not enough traffic to fill its share of the resources, third determining means of the apparatus determine that the sharing framework is not violated and store this result in the metric m(j).

The apparatus may be a part of network elements of operator k. For example, the apparatus may comprise processing resources, memory resources and interfaces of the control unit 10 shown in Fig. 4.

Summing means of the apparatus may sum each metric m(j) over the time of evaluation J to obtain a final metric M=sum(m(j)).

For determining whether the operator k gets less than the agreed minimum number of resources or less than the agreed minimum throughput, or less than the agreed share of resources or less than the agreed share of throughput, first calculating means of the apparatus may calculate an averaged measure of a use of resources or throughput for the operator k for the time period j by measuring the use at several consecutive times including a time t corresponding to the time period j, thereby obtaining several consecutive measurements, and forming a weighted average of the several consecutive measurements, thereby obtaining the averaged measure, wherein the number of the several consecutive measurements included in the averaged measure corresponds to an averaging period.

For determining whether the operator k gets less than the agreed share of resources or less than the agreed share of throughput, obtaining means of the apparatus may obtain the averaged measure for each operator k of the part of the communication network, thereby obtaining averaged measures, and sum the averaged measures. Calculating means of the apparatus may calculate a share of the operator k by dividing the averaged measure of the operator k by the summed averaged measures.

The averaging period may be set greater than that of packet scheduler metrics and/or 10 times greater than that of the packet scheduler metrics.

The several consecutive times may correspond to an integer counter of time transmission intervals.

According to an embodiment of the invention, in an evaluation method it is detected whether an operator k of at least a part of a communication network gets less than an agreed minimum number of resources/throughput or less than an agreed share of resources/throughput according to a sharing framework. In case it is detected that the operator k does not get less than the agreed minimum number/share of resources/throughput, it is determined that the sharing framework is not violated and this result is stored in a metric m(j). In case it is detected that the operator k gets less than the agreed minimum number/share of resources/throughput, it is detected whether the operator k has enough traffic to be served to fill the agreed minimum number/share of resources/throughput. In case it is detected that the operator k has enough traffic to be served, it is determined that the sharing framework is violated and this result is stored in the metric m(j). In case it is detected that the operator k has not enough traffic to fill its share of the resources, it is determined that the sharing framework is not violated and this result is stored in the metric m(j).

It is to be understood that the above description is illustrative of the invention and is not to be construed as limiting the invention. Various modifications and applications may occur to those skilled in the art as defined by the appended claims.

## Claims

1. A method comprising:

   for every time period j of a time of evaluation J, wherein j is an integer equal to or greater than 1,
   detecting whether an operator k of at least a part of a communication network gets less than an agreed minimum number of resources of the part of the communication network or less than an agreed minimum throughput in the part of the communication network, or gets less than an agreed share of resources of the part of the communication network or less than an agreed share of throughput in the part of the communication network, wherein the agreed minimum number of resources or the agreed minimum throughput, or the agreed share of resources or the agreed share of throughput is defined in a sharing framework, wherein k is an integer equal to or greater than 2,
   in case it is detected that the operator k does not get less than the agreed minimum number of resources or less than the agreed minimum throughput, or less than the agreed share of resources or less than the agreed share of throughput, determining that the sharing framework is not violated and storing this result in a metric m(j), and
   in case it is detected that the operator k gets less than the agreed minimum number of resources or less than the agreed minimum throughput, or less than the agreed share of resources or less than the agreed share of throughput, detecting whether the operator k has enough traffic to be served to fill the agreed minimum number of resources or the agreed minimum throughput, or the agreed share of resources or the agreed share of throughput,
   in case it is detected that the operator k has enough traffic to be served, determining that the sharing framework is violated and storing this result in the metric m(j), and
   in case it is detected that the operator k has not enough traffic to fill its share of the resources, determining that the sharing framework is not violated and storing this result in the metric m(j).

2. The method of claim 1, comprising:

   summing each metric m(j) over the time of evaluation J to obtain a final metric M=sum(m(j)).

**3.** The method of claim 1 or 2, comprising:

for determining whether the operator k gets less than the agreed minimum number of resources or less than the agreed minimum throughput, or less than the agreed share of resources or less than the agreed share of throughput, calculating an averaged measure of a use of resources or throughput for the operator k for the time period j by measuring the use at several consecutive times including a time t corresponding to the time period j, thereby obtaining several consecutive measurements, and forming a weighted average of the several consecutive measurements, thereby obtaining the averaged measure, wherein the number of the several consecutive measurements included in the averaged measure corresponds to an averaging period.

**4.** The method of claim 3, comprising:

for determining whether the operator k gets less than the agreed share of resources or less than the agreed share of throughput, obtaining the averaged measure for each operator k of the part of the communication network, thereby obtaining averaged measures, and summing the averaged measures; and calculating a share of the operator k by dividing the averaged measure of the operator k by the summed averaged measures.

**5.** The method of claim 3 or 4, wherein the averaging period is set greater than that of packet scheduler metrics and/or 10 times greater than that of the packet scheduler metrics.

**6.** The method of any one of claims 3 to 5, wherein a weighted filter is applied to the several consecutive measurements, a length of the weighted filter corresponding to the averaging period.

**7.** The method of any one of claims 3 to 6, wherein the several consecutive times correspond to an integer counter of time transmission intervals.

**8.** An apparatus comprising:

a control unit, configured to:

for every time period j of a time of evaluation J, wherein j is an integer equal to or greater than 1, detect whether an operator k of at least a part of a communication network gets less than an agreed minimum number of resources of the part of the communication network or less than an agreed minimum throughput in the part of the communication network, or gets less than an agreed share of resources of the part of the communication network or less than an agreed share of throughput in the part of the communication network, wherein the agreed minimum number of resources or the agreed minimum throughput, or the agreed share of resources or the agreed share of throughput is defined in a sharing framework, wherein k is an integer equal to or greater than 2, in case it is detected that the operator k does not get less than the agreed minimum number of resources or less than the agreed minimum throughput, or less than the agreed share of resources or less than the agreed share of throughput, determine that the sharing framework is not violated and store this result in a metric m(j), and in case it is detected that the operator k gets less than the agreed minimum number of resources or less than the agreed minimum throughput, or less than the agreed share of resources or less than the agreed share of throughput, detect whether the operator k has enough traffic to be served to fill the agreed minimum number of resources or the agreed minimum throughput, or the agreed share of resources or the agreed share of throughput, in case it is detected that the operator k has enough traffic to be served, determine that the sharing framework is violated and store this result in the metric m(j), and in case it is detected that the operator k has not enough traffic to fill its share of the resources, determine that the sharing framework is not violated and store this result in the metric m(j).

**9.** The apparatus of claim 8, wherein the control unit is configured to sum each metric m(j) over the time of evaluation J to obtain a final metric M=sum(m(j)).

**10.** The apparatus of claim 8 or 9, wherein the control unit is configured to:

to determine whether the operator k gets less than the agreed minimum number of resources or less than the agreed minimum throughput, or less than the agreed share of resources or less than the agreed share of throughput,

calculate an averaged measure of a use of resources or throughput for the operator k for the time period j by measuring the use at several consecutive times including a time t corresponding to the time period j, thereby obtaining several consecutive measurements, and forming a weighted average of the several consecutive measurements, thereby obtaining the averaged measure, wherein the number of the several consecutive measurements included in the averaged measure corresponds to an averaging period.

**11.** The apparatus of claim 10, wherein the control unit is configured to:

to determine whether the operator k gets less than the agreed share of resources or less than the agreed share of throughput,

obtain the averaged measure for each operator k of the part of the communication network, thereby obtaining averaged measures, and sum the averaged measures; and

calculate a share of the operator k by dividing the averaged measure of the operator k by the summed averaged measures.

**12.** The apparatus of claim 10 or 11, wherein the control unit is configured to set the averaging period greater than that of packet scheduler metrics and/or 10 times greater than that of the packet scheduler metrics.

**13.** The apparatus of any one of claims 10 to 12, wherein the control unit is configured to apply a weighted filter to the several consecutive measurements, a length of the weighted filter corresponding to the averaging period.

**14.** The apparatus of any one of claims 10 to 13, wherein the several consecutive times correspond to an integer counter of time transmission intervals.

**15.** A computer program product including a program for a processing device, comprising software code portions for performing the steps of any one of claims 1 to 7 when the program is run on the processing device.

**16.** The computer program product according to claim 15, wherein the computer program product comprises a computer-readable medium on which the software code portions are stored.

**17.** The computer program product according to claim 15, wherein the program is directly loadable into an internal memory of the processing device.

**Patentansprüche**

**1.** Verfahren, das Folgendes umfasst:

für jedes Zeitintervall j eines Auswertungszeitraums J, wobei j eine ganze Zahl gleich oder größer als 1 ist, Detektieren, ob ein Betreiber k wenigstens eines Teils eines Kommunikationsnetzes weniger als eine vereinbarte minimale Anzahl von Betriebsmitteln des Teils des Kommunikationsnetzes oder weniger als einen vereinbarten minimalen Durchsatz in dem Teil des Kommunikationsnetzes erhält oder weniger als einen vereinbarten Anteil der Betriebsmittel des Teils des Kommunikationsnetzes oder weniger als einen vereinbarten Anteil des Durchsatzes in dem Teil des Kommunikationsnetzes erhält, wobei die vereinbarte minimale Anzahl von Betriebsmitteln oder der vereinbarte minimale Durchsatz oder der vereinbarte Anteil der Betriebsmittel oder der vereinbarte Anteil des Durchsatzes in einem Mitbenutzungsrahmen definiert ist, wobei k eine ganze Zahl gleich oder größer als 2 ist,

falls detektiert wird, dass der Betreiber k nicht weniger als die vereinbarte minimale Anzahl von Betriebsmitteln oder weniger als den vereinbarten minimalen Durchsatz oder weniger als den vereinbarten Anteil der Betriebsmittel oder weniger als den vereinbarten Anteil des Durchsatzes erhält, Bestimmen, dass der Mitbenutzungsrahmen nicht verletzt ist und Speichern dieses Ergebnisses in einer Metrik m(j), und,

falls detektiert wird, dass der Betreiber k weniger als die vereinbarte minimale Anzahl von Betriebsmitteln oder weniger als den vereinbarten minimalen Durchsatz oder weniger als den vereinbarten Anteil der Betriebsmittel oder weniger als den vereinbarten Anteil des Durchsatzes erhält, Detektieren, ob der Betreiber k ausreichend zu bedienenden Verkehr besitzt, um die vereinbarte minimale Anzahl von Betriebsmitteln oder den vereinbarten minimalen Durchsatz oder den vereinbarten Anteil der Betriebsmittel oder den vereinbarten Anteil des Durchsatzes zu füllen,

falls detektiert wird, dass der Betreiber k ausreichend zu bedienenden Verkehr besitzt, Bestimmen, dass der Mitbenutzungsrahmen verletzt ist und Speichern dieses Ergebnisses in der Metrik m(j), und,

falls detektiert wird, dass der Betreiber k nicht ausreichend Verkehr besitzt, um seinen Anteil der Betriebsmittel zu füllen, Bestimmen, dass der Mitbenutzungsrahmen nicht verletzt ist und Speichern dieses Ergebnisses in der Metrik m(j).

2. Verfahren nach Anspruch 1, das Folgendes umfasst:

Summieren jeder Metrik m(j) über den Auswertungszeitraum J, um eine endgültige Metrik M = sum(m(j)) zu erhalten.

3. Verfahren nach Anspruch 1 oder 2, das Folgendes umfasst:

für das Bestimmen, ob der Betreiber k weniger als die vereinbarte minimale Anzahl von Betriebsmitteln oder weniger als den vereinbarten minimalen Durchsatz oder weniger als den vereinbarten Anteil der Betriebsmittel oder weniger als den vereinbarten Anteil des Durchsatzes erhält, Berechnen eines gemittelten Maßes einer Verwendung der Betriebsmittel oder des Durchsatzes für den Betreiber k während des Zeitintervalls j durch das Messen der Verwendung zu mehreren aufeinanderfolgenden Zeitpunkten einschließlich eines Zeitpunkts t, der dem Zeitintervall j entspricht, dadurch Erhalten mehrerer aufeinanderfolgende Messungen, und Bilden eines gewichteten Durchschnitts der mehreren aufeinanderfolgenden Messungen, dadurch Erhalten des gemittelten Maßes, wobei die Anzahl der mehreren aufeinanderfolgenden Messungen, die in dem gemittelten Maß enthalten ist, einer Mittelungsperiode entspricht.

4. Verfahren nach Anspruch 3, das Folgendes umfasst:

zum Bestimmen, ob der Betreiber k weniger als den vereinbarten Anteil der Betriebsmittel oder weniger als den vereinbarten Anteil des Durchsatzes erhält, Erhalten des gemittelten Maßes für jeden Betreiber k des Teils des Kommunikationsnetzes, dadurch Erhalten gemittelter Maße, und Summieren der gemittelten Maße; und Berechnen eines Anteils des Betreibers k durch das Dividieren des gemittelten Maßes des Betreibers k durch die summierten gemittelten Maße.

5. Verfahren nach Anspruch 3 oder 4, wobei die Mittelungsperiode größer als die der Paketplaner-Metriken und/oder 10-mal größer als die der Paketplaner-Metriken festgelegt ist.

6. Verfahren nach einem der Ansprüche 3 bis 5, wobei auf die mehreren aufeinanderfolgenden Messungen ein gewichtetes Filter angewendet wird, wobei eine Länge des gewichteten Filters der Mittelungsperiode entspricht.

7. Verfahren nach einem der Ansprüche 3 bis 6, wobei die mehreren aufeinanderfolgenden Zeitpunkte einem ganzzahligen Zähler der Übertragungszeitintervalle entsprechen.

8. Vorrichtung, die Folgendes umfasst:

eine Steuereinheit, die dafür ausgelegt ist:

für jedes Zeitintervall j eines Auswertungszeitraums J, wobei j eine ganze Zahl gleich oder größer als 1 ist, zu detektieren, ob ein Betreiber k wenigstens eines Teils eines Kommunikationsnetzes weniger als eine vereinbarte minimale Anzahl von Betriebsmitteln des Teils des Kommunikationsnetzes oder weniger als einen vereinbarten minimalen Durchsatz in dem Teil des Kommunikationsnetzes erhält oder weniger als einen vereinbarten Anteil der Betriebsmittel des Teils des Kommunikationsnetzes oder weniger als einen vereinbarten Anteil des Durchsatzes in dem Teil des Kommunikationsnetzes erhält, wobei die vereinbarte minimale Anzahl von Betriebsmitteln oder der vereinbarte minimale Durchsatz oder der vereinbarte Anteil der Betriebsmittel oder der vereinbarte Anteil des Durchsatzes in einem Mitbenutzungsrahmen definiert ist, wobei k eine ganze Zahl gleich oder größer als 2 ist,

falls detektiert wird, dass der Betreiber k nicht weniger als die vereinbarte minimale Anzahl von Betriebsmitteln oder weniger als den vereinbarten minimalen Durchsatz oder weniger als den vereinbarten Anteil der Betriebsmittel oder weniger als den vereinbarten Anteil des Durchsatzes erhält, zu bestimmen, dass der Mitbenutzungsrahmen nicht verletzt ist und dieses Ergebnis in einer Metrik m(j) zu speichern, und,

falls detektiert wird, dass der Betreiber k weniger als die vereinbarte minimale Anzahl von Betriebsmitteln oder weniger als den vereinbarten minimalen Durchsatz oder weniger als den vereinbarten Anteil der Betriebsmittel oder weniger als den vereinbarten Anteil des Durchsatzes erhält, zu detektieren, ob der Betreiber k ausreichend zu bedienenden Verkehr besitzt, um die vereinbarte minimale Anzahl von Betriebsmitteln oder den vereinbarten minimalen Durchsatz oder den vereinbarten Anteil der Betriebsmittel oder den vereinbarten Anteil des Durchsatzes zu füllen,
falls detektiert wird, dass der Betreiber k ausreichend zu bedienenden Verkehr besitzt, zu bestimmen, dass der Mitbenutzungsrahmen verletzt ist und dieses Ergebnis in der Metrik m(j) zu speichern, und,
falls detektiert wird, dass der Betreiber k nicht ausreichend Verkehr besitzt, um seinen Anteil der Betriebsmittel zu füllen, zu bestimmen, dass der Mitbenutzungsrahmen nicht verletzt ist und dieses Ergebnis in der Metrik m(j) zu speichern.

9. Vorrichtung nach Anspruch 8, wobei die Steuereinheit dafür ausgelegt ist, jede Metrik m(j) über den Auswertungszeitraum J zu summieren, um eine endgültige Metrik M = sum(m(j)) zu erhalten.

10. Vorrichtung nach Anspruch 8 oder 9, wobei die Steuereinheit dafür ausgelegt ist:

zu bestimmen, ob der Betreiber k weniger als die vereinbarte minimale Anzahl von Betriebsmitteln oder weniger als den vereinbarten minimalen Durchsatz oder weniger als den vereinbarten Anteil der Betriebsmittel oder weniger als den vereinbarten Anteil des Durchsatzes erhält,
ein gemitteltes Maß einer Verwendung der Betriebsmittel oder des Durchsatzes für den Betreiber k während des Zeitintervalls j durch das Messen der Verwendung zu mehreren aufeinanderfolgenden Zeitpunkten einschließlich eines Zeitpunkts t, der dem Zeitintervall j entspricht, um dadurch mehrere aufeinanderfolgende Messungen zu erhalten, und das Bilden eines gewichteten Durchschnitts der mehreren aufeinanderfolgenden Messungen, um dadurch das gemittelte Maß zu erhalten, zu berechnen, wobei die Anzahl der mehreren aufeinanderfolgenden Messungen, die in dem gemittelten Maß enthalten ist, einer Mittelungsperiode entspricht.

11. Vorrichtung nach Anspruch 10, wobei die Steuereinheit dafür ausgelegt ist:

zu bestimmen, ob der Betreiber k weniger als den vereinbarten Anteil der Betriebsmittel oder weniger als den vereinbarten Anteil des Durchsatzes erhält,
das gemittelte Maß für jeden Betreiber k des Teils des Kommunikationsnetzes zu erhalten, um dadurch gemittelte Maße zu erhalten, und die gemittelten Maße zu summieren; und
einen Anteil des Betreibers k durch das Dividieren des gemittelten Maßes des Betreibers k durch die summierten gemittelten Maße zu berechnen.

12. Vorrichtung nach Anspruch 10 oder 11, wobei die Steuereinheit dafür ausgelegt ist, die Mittelungsperiode größer als die der Paketplaner-Metriken und/oder 10-mal größer als die der Paketplaner-Metriken zu setzen.

13. Vorrichtung nach einem der Ansprüche 10 bis 12, wobei die Steuereinheit dafür ausgelegt ist, auf die mehreren aufeinanderfolgenden Messungen ein gewichtetes Filter anzuwenden, wobei eine Länge des gewichteten Filters der Mittelungsperiode entspricht.

14. Vorrichtung nach einem der Ansprüche 10 bis 13, wobei die mehreren aufeinanderfolgenden Zeitpunkte einem ganzzahligen Zähler der Übertragungszeitintervalle entsprechen.

15. Computerprogrammprodukt, das ein Programm für eine Verarbeitungsvorrichtung enthält, das Softwarecodeabschnitte zum Ausführen der Schritte nach einem der Ansprüche 1 bis 7 umfasst, wenn das Programm in der Verarbeitungsvorrichtung ausgeführt wird.

16. Computerprogrammprodukt nach Anspruch 15, wobei das Computerprogrammprodukt ein computerlesbares Medium umfasst, in dem die Softwarecodeabschnitte gespeichert sind.

**17.** Computerprogrammprodukt nach Anspruch 15, wobei das Programm direkt in den internen Speicher der Verarbeitungsvorrichtung ladbar ist.

**Revendications**

**1.** Un procédé comprenant :

pour chaque période de temps j d'une durée d'évaluation J, j étant un entier égal ou supérieur à 1, la détection si un opérateur k d'au moins une partie d'un réseau de communication obtient moins qu'un nombre minimum de ressources convenu de la part du réseau de communication ou moins qu'un débit minimum convenu de la part du réseau de communication ou obtient moins qu'une part de ressources convenue de la part du réseau de communication ou moins qu'une part de débit convenue de la part du réseau de communication, le nombre minimum de ressources convenu ou le débit minimum convenu ou la part de ressources convenue ou la part de débit convenue étant défini dans une infrastructure de partage, dans laquelle k est un entier égal ou supérieur à 2, dans le cas où il est détecté que l'opérateur k n'obtient pas moins que le nombre minimum de ressources convenu ou moins que le débit minimum convenu ou moins que la part de ressources convenue ou moins que la part de débit convenue, la détermination que l'infrastructure de partage n'est pas violée et la conservation en mémoire de ce résultat dans un paramètre m(j), et dans le cas où il est détecté que l'opérateur k obtient moins que le nombre minimum de ressources convenu ou moins que le débit minimum convenu ou moins que la part de ressources convenue ou moins que la part de débit convenue, la détection si l'opérateur k possède suffisamment de trafic à desservir de façon à satisfaire le nombre minimum de ressources convenu ou le débit minimum convenu ou la part de ressources convenue ou la part de débit convenue, dans le cas où il est détecté que l'opérateur k possède suffisamment de trafic à desservir, la détermination que l'infrastructure de partage est violée et la conservation en mémoire de ce résultat dans le paramètre m(j), et dans le cas où il est détecté que l'opérateur k ne possède pas suffisamment de trafic de façon à satisfaire sa part des ressources, la détermination que l'infrastructure de partage n'est pas violée et la conservation en mémoire de ce résultat dans le paramètre m(j).

**2.** Le procédé selon la revendication 1, comprenant :

la sommation de chaque paramètre m(j) sur la durée d'évaluation J de façon à obtenir un paramètre final M=sum(m(j)).

**3.** Le procédé selon la revendication 1 ou 2, comprenant :

pour la détermination si l'opérateur k obtient moins que le nombre minimum de ressources convenu ou moins que le débit minimum convenu ou moins que la part de ressources convenue ou moins que la part de débit convenue, le calcul d'une mesure moyennée d'une utilisation de ressources ou d'un débit pour l'opérateur k pour la période de temps j par la mesure de l'utilisation à plusieurs instants consécutifs comprenant un instant t correspondant à la période de temps j, permettant ainsi d'obtenir plusieurs mesures consécutives, et la formation d'une moyenne pondérée des plusieurs mesures consécutives, permettant ainsi d'obtenir la mesure moyennée, le nombre des plusieurs mesures consécutives incluses dans la mesure moyennée correspondant à une période de calcul de moyennes.

**4.** Le procédé selon la revendication 3, comprenant :

pour la détermination si l'opérateur k obtient moins que la part de ressources convenue ou moins que la part de débit convenue, l'obtention de la mesure moyennée pour chaque opérateur k de la part du réseau de communication, permettant ainsi d'obtenir des mesures moyennées, et la sommation des mesures moyennées, et le calcul d'une part de l'opérateur k par la division de la mesure moyennée de l'opérateur k par les mesures moyennées cumulées.

**5.** Le procédé selon la revendication 3 ou 4, dans lequel la période de calcul de moyennes est définie plus grande que celle de paramètres d'un ordonnanceur de paquets et/ou dix fois plus grande que celle des paramètres d'un ordonnanceur de paquets.

6. Le procédé selon l'une quelconque des revendications 3 à 5, dans lequel un filtre pondéré est appliqué aux plusieurs mesures consécutives, une longueur du filtre pondéré correspondant à la période de calcul de moyennes.

7. Le procédé selon l'une quelconque des revendications 3 à 6, dans lequel les plusieurs instants consécutifs correspondent à un compteur d'entiers d'intervalles de transmission temporels.

8. Un appareil comprenant :

une unité de commande configurée de façon à :

pour chaque période de temps j d'une durée d'évaluation J, dans laquelle j est un entier égal ou supérieur à 1, détecter si un opérateur k d'au moins une partie d'un réseau de communication obtient moins qu'un nombre minimum de ressources convenu de la part du réseau de communication ou moins qu'un débit minimum convenu de la part du réseau de communication ou obtient moins qu'une part de ressources convenue de la part du réseau de communication ou moins qu'une part de débit convenue de la part du réseau de communication, le nombre minimum de ressources convenu ou le débit minimum convenu ou la part de ressources convenue ou la part de débit convenue étant défini dans une infrastructure de partage, dans laquelle k est un entier égal ou supérieur à 2,
dans le cas où il est détecté que l'opérateur k n'obtient pas moins que le nombre minimum de ressources convenu ou moins que le débit minimum convenu ou moins que la part de ressources convenue ou moins que la part de débit convenue, déterminer que l'infrastructure de partage n'est pas violée et conserver en mémoire ce résultat dans un paramètre m(j), et
dans le cas où il est détecté que l'opérateur k obtient moins que le nombre minimum de ressources convenu ou moins que le débit minimum convenu ou moins que la part de ressources convenue ou moins que la part de débit convenue, détecter si l'opérateur k possède suffisamment de trafic à desservir de façon à satisfaire le nombre minimum de ressources convenu ou le débit minimum convenu ou la part de ressources convenue ou la part de débit convenue,
dans le cas où il est détecté que l'opérateur k possède suffisamment de trafic à desservir, déterminer que l'infrastructure de partage est violée et conserver en mémoire ce résultat dans le paramètre m(j), et
dans le cas où il est détecté que l'opérateur k ne possède pas suffisamment de trafic de façon à satisfaire sa part des ressources, déterminer que l'infrastructure de partage n'est pas violée et conserver en mémoire ce résultat dans le paramètre m(j).

9. L'appareil selon la revendication 8, dans lequel l'unité de commande est configurée de façon à cumuler chaque paramètre m(j) sur la durée d'évaluation J de façon à obtenir un paramètre final M=sum(m(j)).

10. L'appareil selon la revendication 8 ou 9, dans lequel l'unité de commande est configuré de façon à :

déterminer si l'opérateur k obtient moins que le nombre minimum de ressources convenu ou moins que le débit minimum convenu ou moins que la part de ressources convenue ou moins que la part de débit convenue, calculer une mesure moyennée d'une utilisation de ressources ou d'un débit pour l'opérateur k pour la période de temps j par la mesure de l'utilisation à plusieurs instants consécutifs comprenant un instant t correspondant à la période de temps j, permettant ainsi d'obtenir plusieurs mesures consécutives, et la formation d'une moyenne pondérée des plusieurs mesures consécutives, permettant ainsi d'obtenir la mesure moyennée, le nombre des plusieurs mesures consécutives inclus dans la mesure moyennée correspondant à une période de calcul de moyennes.

11. L'appareil selon la revendication 10, dans lequel l'unité de commande est configurée de façon à :

déterminer si l'opérateur k obtient moins que la part de ressources convenue ou moins que la part de débit convenue, obtenir la mesure moyennée pour chaque opérateur k de la part du réseau de communication, permettant ainsi d'obtenir des mesures moyennées, et cumuler les mesures moyennées, et calculer une part de l'opérateur k par la division de la mesure moyennée de l'opérateur k par les mesures moyennées cumulées.

**12.** L'appareil selon la revendication 10 ou 11, dans lequel l'unité de commande est configurée de façon à définir la période de calcul de moyennes plus grande que celle de paramètres d'un ordonnanceur de paquets et/ou dix fois plus grande que celle des paramètres d'un ordonnanceur de paquets.

**13.** L'appareil selon l'une quelconque des revendications 10 à 12, dans lequel l'unité de commande est configurée de façon à appliquer un filtre pondéré aux plusieurs mesures consécutives, une longueur du filtre pondéré correspondant à la période de calcul de moyennes.

**14.** L'appareil selon l'une quelconque des revendications 10 à 13, dans lequel les plusieurs instants consécutifs correspondent à un compteur d'entiers d'intervalles de transmission temporels.

**15.** Un produit de programme informatique comprenant un programme destiné à un dispositif de traitement, comprenant des parties de code logiciel destinées à l'exécution des étapes selon l'une quelconque des revendications 1 à 7 lorsque le programme est exécuté sur le dispositif de traitement.

**16.** Le produit de programme informatique selon la revendication 15, dans lequel le produit de programme informatique comprend un support lisible par ordinateur sur lequel les parties de code logiciel sont conservées en mémoire.

**17.** Le produit de programme informatique selon la revendication 15, dans lequel le programme peut être directement chargé dans une mémoire interne du dispositif de traitement.

Fig. 1

Fig. 2

Fig. 3

Fig. 4

**EP 2 652 907 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007264986 A1